**Europäisches Patentamt**

**European Patent Office**

**Office européen des brevets**

(11) Veröffentlichungsnummer: **0 114 693**
**B1**

(12) **EUROPÄISCHE PATENTSCHRIFT**

(45) Veröffentlichungstag der Patentschrift:
13.07.88

(21) Anmeldenummer: **84100635.6**

(22) Anmeldetag: **21.01.84**

(51) Int. Cl.⁴: **H 04 N 11/00**

(54) **System zur Übertragung eines Farbvideosignals erhöhter Auflösung.**

(30) Priorität: **25.01.83 DE 3302286**

(43) Veröffentlichungstag der Anmeldung:
**01.08.84 Patentblatt 84/31**

(45) Bekanntmachung des Hinweises auf die Patenterteilung:
**13.07.88 Patentblatt 88/28**

(84) Benannte Vertragsstaaten:
**DE FR GB NL**

(56) Entgegenhaltungen:
**IEEE SPECTRUM, Band 20, Nr. 12, Dezember 1983, NEW York, USA; R.K. JURGEN "The problems and promises et high-definition television", Seiten 46-51**

(73) Patentinhaber: **ROBERT BOSCH GMBH, Postfach 50, D-7000 Stuttgart 1 (DE)**

(72) Erfinder: **Wendland, Broder, Prof. Dr.-Ing., Am Stadtgarten 58, D-4355 Waltrop (DE)**
Erfinder: **Schröder, Hartmut, Dr. Ing., Weisse Taube 30, D-4600 Dortmund 50 (DE)**

**Beschreibung**

Stand der Technik

Die Erfindung geht aus von einem System nach der Gattung des unabhängigen Anspruchs. Unter einem Farbvideosignal erhöhter Auflösung soll insbesondere ein von einer hochauflösenden Farbfernsehkamera, welche z.B. mit doppelter Zeilenzahl betrieben wird, erzeugtes Bildsignal verstanden werden, wobei die Bildauflösung sowohl in horizontaler als auch in vertikaler Bildrichtung erhöht sein soll.

Weltweit wird die Einführung eines Fernsehsystems mit gegenüber dem derzeitigen System deutlich erhöhter Auflösung angestrebt. Bisher existierende Vorschläge für solche neuartigen Verfahren gehen nahezu ausschliesslich von der Nutzung sehr breitbandiger und hochzeiliger, derzeit noch nicht existierender Übertragungskanäle aus. Parallel dazu wird international intensiv über die Einführung von Fernsehsystemen zur Direktübertragung von Signalen geostationärer Satelliten zum Teilnehmer diskutiert. Von hoher Priorität sind dabei derzeit Verfahren, in denen das Luminanz- und das Chrominanzsignal im Zeitmultiplex übertragen werden (s. z.B. das sog. MAC-Verfahren oder das von der Anmelderin in der DE-A1-33 39 533 beschriebene Verfahren). Die bei diesen Zeitmultiplex-Verfahren z.Zt. angestrebte Auflösung im Fernsehbild soll jedoch gegenüber der bei derzeitigen Übertragungsverfahren nicht wesentlich vergrössert werden.

Der vorliegenden Erfindung liegt daher die Aufgabe zugrunde, ein System der eingangs genannten Art anzugeben, mit dem es bei unveränderter Zeilenzahl – z.B. bei Satellitenübertragung nach dem MAC-Verfahren – möglich ist, ein Bildsignal hoher Auflösung für einen Hochqualitätsempfänger im Breitformat zu übertragen, welches ausserdem gleichzeitig den kompatiblen Empfang durch einen Standardempfänger ermöglicht.

Vorteile der Erfindung

Das erfindungsgemässe System mit den kennzeichnenden Merkmalen des unabhängigen Anspruchs hat den Vorteil, dass hiermit ein Fernsehbild hoher Auflösung ohne Qualitätsverluste über einen Fernsehkanal mit Standardzeilenzahl übertragen werden kann, wobei ausserdem wegen der verwendeten Standardzeilenzahl ein Signal für Standardempfänger ableitbar ist.

Durch die in den abhängigen Ansprüchen aufgeführten Massnahmen sind vorteilhafte Weiterbildungen und Verbesserungen des im Hauptanspruch angegebenen Systems möglich. Besonders vorteilhaft ist, dass bei Vorliegen eines breitformatigen Videosignals (Seitenverhältnis 5:3) ausserdem in die Vertikalaustastlücke eine Kennadresse eingefügt wird, mit deren Hilfe die Wiedergabe eines normalformatigen Videosignals (Seitenverhältnis 4:3) gesteuert werden kann, so dass nur der gewünschte Formatbereich ausgewertet wird.

Ausführungsbeispiele

Ausführungsbeispiele der Erfindung sind in der Zeichnung dargestellt und in der nachfolgenden Beschreibung näher erläutert. Es zeigen:

Fig. 1 ein Blockschaltbild des erfindungsgemässen Systems,

Fig. 2 ein Blockschaltbild eines Zeilenzahlcodierers zur Wandlung eines hochzeiligen Signals in ein Standardzeilenzahlsignal,

Fig. 3 Ausschnitte des gewandelten Zeilenzahlformats,

Fig. 4 ein Blockschaltbild eines Codierers zur Erzeugung des Zeitmultiplex-Farbvideosignals,

Fig. 5 das im Codierer nach Fig. 4 gewandelte Farbvideosignal,

Fig. 6 ein Blockschaltbild eines Decodierers zur Wiedergewinnung der Videosignalkomponenten,

Fig. 7 die im Decodierer nach Fig. 6 wiedergewonnenen Signalkomponenten des Zeitmultiplex-Signals,

Fig. 8 ein Blockschaltbild eines Zeilenzahl-Decodierers zur Rückgewinnung des hochzeiligen Signals,

Fig. 9 die im Decodierer nach Fig. 8 vorgesehene Recheneinheit.

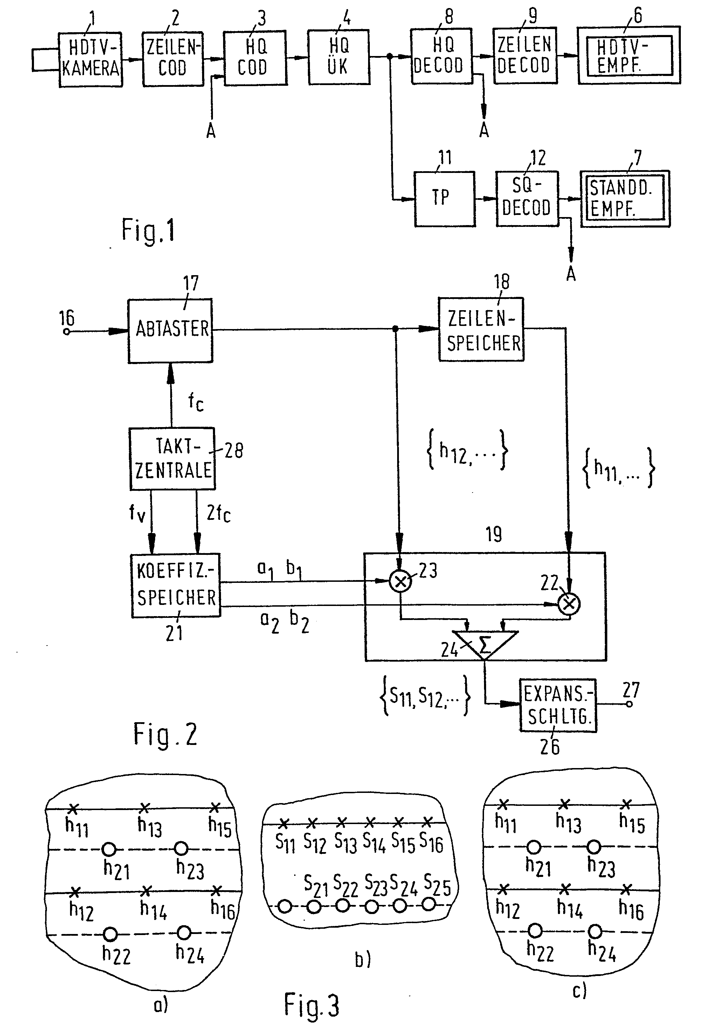

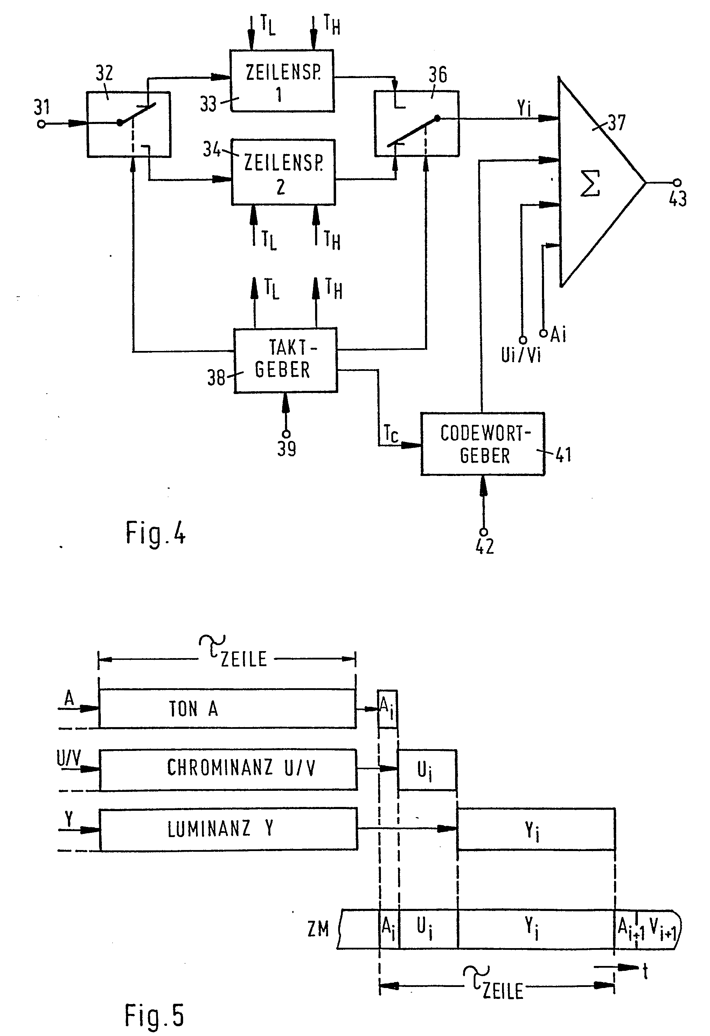

Bei dem in Fig. 1 dargestellten erfindungsgemässen Übertragungssystems wird von einer sog. HDTV (High Definition Television)-Kamera 1 ein hochzeiliges Videosignal (z.B. 1249-zeiliges, mit einer Zeilendauer von 32 µs) mit Breitformat (z.B. mit Seitenverhältnis 5:3) erzeugt. Dieses hochzeilige Videosignal wird dann einem Zeilenzahlencodierer 2 zugeführt, mit welchem daraus ein Videosignal erhöhter Bandbreite, aber mit Standardzeilenzahl (z.B. 625 Zeilen) gebildet wird. Eine genaue Erläuterung erfolgt bei der folgenden Beschreibung der Figuren 2 und 3. Dieses Farbvideosignal mit der Standardzeilenzahl wird nun in einem Hochqualitäts-Codierer 3 in ein Zeitmultiplexsignal umgewandelt, wobei die parallel vorliegenden Signale für Ton (A), Chrominanz (U/V) und Luminanz (Y) zeitlich komprimiert und so verschachtelt werden, dass sie innerhalb einer Zeilendauer übertragen werden können. Eine weitere Beschreibung erfolgt im Zusammenhang mit den Figuren 4 und 5.

Dieses so gebildete Farbvideosignal mit Standardzeilenzahl in Zeitmultiplex wird über einen Übertragungskanal 4 mit erhöhter Bandbreite (evtl. als frequenzmoduliertes Videosignal, wobei der Übertragungskanal 4 am Eingang einen Frequenzmodulator und am Ausgang einen Demodulator enthält) übertragen.

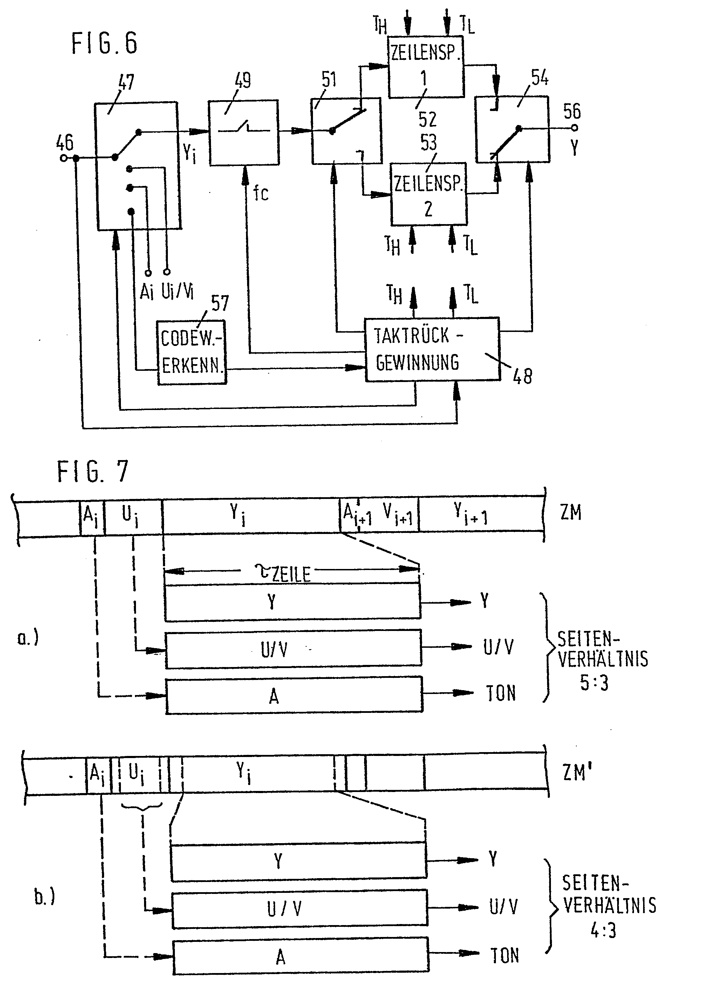

Das übertragene Farbvideosignal kann nun einerseits nach Zeilenwandlung als hochzeiliges Videosignal einem hochauflösenden Empfänger 6 oder andererseits als Videosignal mit Standardzeilenzahl einem Standardempfänger 7 zugeführt werden. Das dem Empfänger 6 zuzuführende Videosignal wird zunächst einem Hochqualitätsdecodierer 8 zugeleitet zur Wiedergewinnung der zeitseriell vorliegenden Informationen von Ton, Chrominanz und Luminanz als Parallelsignale, aus denen danach in einem Zeilendecodierer 9 ein hochzeiliges Videosignal gebildet wird. Eine ausführlichere Beschreibung dieses Zweiges wird im Zusammenhang mit der Erläuterung der Figuren 6 bis 9 gegeben.

Das im Empfänger 7 wiederzugebende Videosignal wird über ein Tiefpassfilter 11 zur Erzeugung eines Standardzeilensignals mit Standardauflösung geleitet. Danach wird das gefilterte Zeitmultiplex-Videosignal mit Hilfe eines Standard-Qualitäts-Decodierers 12 ebenfalls in ein Farbvideosignal mit parallel vorliegenden Informationen von Ton, Chrominanz und Luminanz gewandelt. Damit kann das hochaufgelöste Videosignal kompatibel mit Standardempfängern wiedergegeben werden. Eine nähere Erläuterung dieser Umwandlung erfolgt mit der Beschreibung der Fig. 6 u. 7.

Dem in Fig. 2 dargestellten Zeilencodierer 2 (gem. Fig. 1) wird über Klemme 16 das von der HDTV-Kamera 1 erzeugte hochzeilige Farbvideosignal zugeführt und in einer Abtastschaltung 17 komponentenweise abgetastet. Von diesem – beispielsweise in Offset-Lage – abgetasteten Signal sind in Fig. 3a ausschnittsweise mehrere Abtastwerte einiger Zeilen dargestellt, wobei die Abtastwerte des ersten Halbbildes $h_{11}$, $h_{12}$, $h_{13}$, . . . als Kreuze auf den als durchgezogenen Linien dargestellten Zeilen und die Abtastwerte des zweiten Halbbildes $h_{21}$, $h_{22}$, $h_{23}$, . . . als Kreise auf den als gestrichelte Linien dargestellten Zeilen gezeichnet sind. Dieses Signal wird einem Zeilenspeicher 18 zur Verzögerung zugeführt, so dass am Eingang und Ausgang des Zeilenspeichers 18 jeweils die Abtastwerte zweier Zeilen $h_{12}$, $h_{14}$, . . . und $h_{11}$, $h_{13}$, . . . des hochzeiligen Videosignals zur Verfügung stehen.

Die Abtastwerte jeweils beider Zeilen werden einer Recheneinheit 19 zugeleitet, in welcher sie zu neuen Abtastwerten einer neuen Zeile des Signals mit Standardzeilenzahl verknüpft werden. In Fig. 3b sind diese neuen Abtastwerte $s_{11}$, $s_{12}$, $s_{13}$, . . . des ersten Halbbildes wiederum als Kreuze auf durchgezogenen Linien und die neuen Abtastwerte $s_{21}$, $s_{22}$, $s_{23}$, . . . des zweiten Halbbildes als Kreise auf gestrichelten Linien dargestellt. Zur Erzeugung dieser neuen Abtastwerte werden der Recheneinheit 19 von einem Koeffizientenspeicher 21 Koeffizienten $a_1$, $b_1$ und $a_2$, $b_2$, zugeführt, welche entsprechend der Rechenvorschrift für die neuen Abtastwerte $s_{11} = a_1h_{11} + a_2h_{12}$ und $s_{12} = b_1h_{11} + b_2h_{12}$ umgeschaltet werden. Zur Erzeugung des ersten Abtastwertes $s_{11}$ werden also zunächst in zwei Multiplizierern 22 und 23 die gewichteten Abtastwerte $a_1h_{11}$ und $a_2h_{12}$ gebildet, welche dann in der Summierschaltung 24 addiert werden. Am Ausgang der Recheneinheit 19 ist somit ein Signal gem. 3b abnehmbar, dessen nebeneinanderliegende Abtastwerte $s_{11}$, $s_{12}$ eines Halbbildes aus zwei untereinanderliegenden Abtastwerten $h_{11}$, $h_{12}$ eines Halbbildes des hochzeiligen Signals gewonnen wurden. Auf diese Weise entsteht aus je zwei Zeilen des hochzeiligen Signals eine neue Zeile des Standardzeilensignals.

Da das Ausgangssignal der Recheneinheit 19 noch die verkürzte Zeilendauer des hochzeiligen Signals aufweist, wird dieses Signal einer Expansionsschaltung 26 zugeführt, in welcher durch zeitliche Expansion die Standardzeilendauer gebildet wird. Selbstverständlich kann eine solche Expansion auch bereits vor der Erzeugung des Standardzeilensignals erfolgen, wodurch sich ausserdem die notwendige Rechengeschwindigkeit der Recheneinheit 19 entsprechend verringern würde. An der Ausgangsklemme 27 ist somit ein Signal gem. Fig. 3b mit Standardzeilendauer abnehmbar, wobei die neuen Zeilen mit $s_{11}$, $s_{12}$, $s_{13}$, . . . und $s_{21}$, $s_{22}$, $s_{23}$, . . . jeweils zwischen den Zeilen des ersten und des zweiten Halbbildes mit $h_{11}$, $h_{13}$, . . . und $h_{21}$, $h_{23}$, . . . gebildet werden.

Zur Taktung der Abtastschaltung 17 mit der Abtastfrequenz $f_c$ sowie des Koeffizientenspeichers 21 mit der Abtastfrequenz $2f_c$ ist eine Taktzentrale 28 vorgesehen. Diese erzeugt ausserdem ein V-frequentes Taktsignal $f_v$, um die Abtastwerte der Zeilen des zweiten Halbbildes symmetrisch gegenüber denen des ersten Halbbildes zu verschieben.

Zur Bildung des Zeitmultiplex-Farbvideosignals ZM gem Fig. 5 wird das an der Ausgangsklemme 27 in Fig. 2 abnehmbare Standardzeilensignal an die Eingangsklemme 31 des in Fig. 4 dargestellten Codierers 3 angelegt, von dem im wesentlichen nur der Luminanzkanal gezeichnet wurde. Die an Klemme 31 liegenden Abtastwerte des Luminanzsignals Y werden über einen zeilenfrequent betriebenen Eingangsumschalter 32 zwei Zeilenspeichern 33 und 34 zugeführt, welche alternierend eingeschrieben und ausgelesen werden. Gemäss der Darstellung in Fig. 4 wird der erste Zeilenspeicher 33 gerade mit Abtastwerten gefüllt, was mit niedriger Taktrate $T_L$ erfolgt. Gleichzeitig wird der zweite Zeilenspeicher 34 mit hoher Taktrate $T_H$ ausgelesen. Dies ergibt somit eine zeitliche Kompression des Luminanzsignals Y, welches als komprimiertes Signal $Y_i$ (s. Fig. 5) über den ebenfalls zeilenfrequent betriebenen Ausgang des Umschalters 36 an einen ersten Eingang einer Summierschaltung 37 geführt wird.

Die Einschreib- und Auslesetakte $T_L$ und $T_H$ sowie die zeilenfrequenten Umschaltsignale für die Umschalter 32 und 36 werden von einem Taktgeber 38 erzeugt, welcher über die Klemme 39 von der in Fig. 2 dargestellten Taktzentrale 28 synchronisiert ist.

Wird ein Signal im Breitformat mit einem Seitenverhältnis von z.B. 5:3 von der HDTV-Kamera erzeugt, dann kann zur kompatiblen Versorgung von Standardempfängern (Seitenverhältnis 4:3) in die V-Austastlücke mit Hilfe eines Codewortgebers 41 eine Kennadresse eingelagert werden, welche zur Auslese des «4:3-Signals» dient. Der Codewortgeber 41 erhält die zeitliche Information zur Kennadresseneinlagerung über einen vom Taktgeber 38 erzeugten Takt $T_C$ und das eigentliche Codewort, d.h. die Kennadresse, über eine manuelle Eingabe oder durch eine automatisch aus dem Bildgeschehen abgeleitete Grösse über Klemme 42. Diese Kennadresse wird einem zweiten Eingang der Summierschaltung 37 zugeführt. An einem dritten und vierten Eingang der Summierschaltung 37 liegen die Chrominanzinformation $U_i/V_i$ und die Toninformation $A_i$ (s. dazu auch

Fig. 5). Diese komprimierten Luminanz-, Chrominanz- und Toninformationen sowie das Kennadressensignal werden in der Summierschaltung 37 – wie in Fig. 5 dargestellt – zusammengefügt und über die Ausgangsklemme 43 dem Übertragungskanal 4 (s. Fig. 1) zugeführt.

Dieses über den Übertragungskanal 4 übertragene Zeitmultiplex-Farbvideosignal ZM bzw. ZM' (s. Fig. 7) wird auf der Empfängerseite den Decodierern 8 bzw. 12 zugeführt, deren Blockschaltbild in Fig. 6 dargestellt ist.

Über die Eingangsklemme 46 gelangt dieses Signal ZM bzw. ZM' an einen Demultiplexer 47, in welchem es in seine Komponenten $Y_i$, $U_i/V_i$, $A_i$ aufgeteilt wird. Diese Aufteilung erfolgt über eine Komponentensteuerung aus der Taktrückgewinnungsstufe 48, welche mit dem ankommenden Videosignal synchronisiert wird. An den Ausgängen des Demultiplexers 47 sind dann die Signalkomponenten $Y_i$, $U_i/V_i$ und $A_i$ abnehmbar.

In diesem Ausführungsbeispiel ist nun ebenfalls nur die Weiterverarbeitung der Luminanzkomponente $Y_i$ dargestellt. Diese Komponente wird in einer Abtastschaltung 49 mit der sendeseitigen Abtastfrequenz $f_c$ abgetastet. Dieses abgetastete Signal wird danach über einen zeilenalternierend gesteuerten Eingangsumschalter 51 in zwei Zeilenspeicher 52 bzw. 53 mit dem schnellen Takt $T_H$ eingeschrieben. Das Auslesen der Speicher 53 bzw. 52 erfolgt mit dem langsamen Takt $T_L$, wodurch das komprimierte Luminanzsignal $Y_i$ zum Standardsignal Y expandiert wird. Dieses Signal Y wird nun über einen ebenfalls zeilenalternierend gesteuerten Ausgangsumschalter 54 an die Ausgangsklemme 56 gelegt. In gleicher Weise werden die Signalkomponenten $U_i/V_i$ und $A_i$ verarbeitet.

Im Falle des Hochqualitäts-Decodierers 8 ist an der Klemme 56 ein Luminanzsignal Y im Breitformat 5:3, wie in Fig. 7a dargestellt, abnehmbar. Für den Fall, dass das übertragene Signal dem Standardempfänger 7 zugeführt und hier im Standard-Qualitäts-Decodierer 12 – wie in Fig. 7b dargestellt – weiterverarbeitet wird, ist zusätzlich zu der oben beschriebenen Schaltung eine Codewort-Erkennungsschaltung 57 vorgesehen. Mit dieser ebenfalls an den Demultiplexer 47 angeschlossenen Schaltung 57 wird die im Codewort festgelegte Kennadresse wiedergewonnen und damit die Einschreibtakte $T_H$ der Taktrückgewinnungsstufe 48 so gesteuert, dass genau der gewünschte Formatbereich (Seitenverhältnis 4:3) ausgewertet wird. Die von der Taktrückgewinnungsstufe 48 abgegebenen Taktfrequenzen können dabei entsprechend der Bandbreite des Standardempfängers 7 reduziert werden. Durch diese Signalverarbeitung kann mit Standardempfängern kompatibel das Hochqualitätssignal wiedergegeben werden.

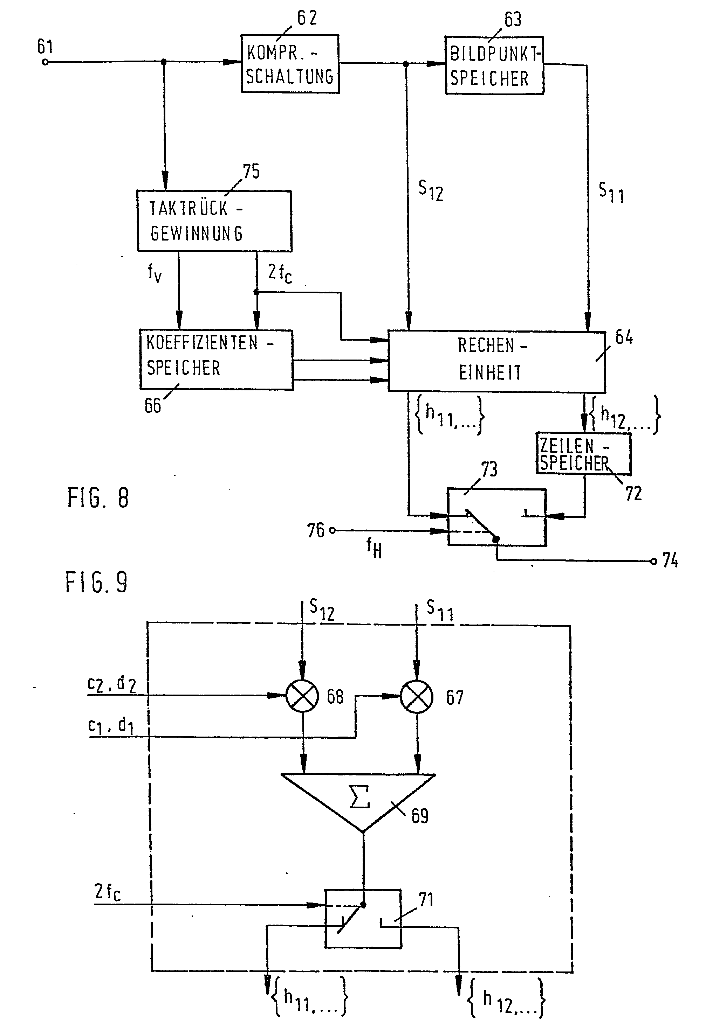

Zur Wiedergabe des Farbvideosignals in einem HDTV-Empfänger 6 muss nun aus dem am Ausgang des Decodierers 8 vorhandenen Signal mit Standardzeilenzahl im Zeilendecodierer 9 ein hochzeiliges Signal gebildet werden. Vom Decodierer 9 ist in Fig. 8 wiederum nur der Luminanzkanal dargestellt, an dessen Eingangsklemme 61 die vom Decodierer 8 abgegebenen Abtastwerte des Luminanzsignals Y liegen. Das Signal wird zunächst einer Kompressionsschaltung 62 zugeführt, in welcher die Zeilendauer beispielsweise auf die Hälfte gestaucht wird. Diese zeitliche Stauchung könnte selbstverständlich auch erst nach der Zeilenzahlwandlung erfolgen, wodurch ebenfalls die nachfolgende Rechengeschwindigkeit reduziert würde. In einem anschliessenden Bildpunktspeicher 63 werden die Abtastwerte verzögert, so dass jeweils paarweise zwei Abtastwerte (z.B. $s_{11}$, $s_{12}$ bzw. $s_{13}$, $s_{14}$ usw. gem. Fig. 3b) zur Verfügung stehen. Diese paarweisen Abtastwerte werden einer Recheneinheit 64 zugeführt, in welcher sie zu zwei getrennten Zeilen des hochzeiligen Signals miteinander verknüpft werden. Der Recheneinheit 64 werden dazu von einem Koeffizientenspeicher 66 die Koeffizienten $c_1$, $d_1$ bzw. $c_2$, $d_2$ zugeführt, die entsprechend der Rechenvorschrift für $h_{11}$, $h_{12}$ umgeschaltet werden.

Bei der in Fig. 9 detailliert dargestellten Recheneinheit 64 werden diese Koeffizienten $c_1$, $d_1$ bzw. $c_2$, $d_2$ jeweils einem Multiplizierer 67 bzw. 68 zugeführt, welchen ausserdem die Abtastwerte $s_{11}$ bzw. $s_{12}$ zugeleitet werden. Nach erfolgter Multiplikation werden die gewichteten Abtastwerte in einer Summierschaltung 69 miteinander addiert, so dass am Ausgang die neuen Abtastwerte nach folgender Gleichung nacheinander abnehmbar sind: $h_{11} = c_1 s_{11} + c_2 s_{12}$ und $h_{12} = d_1 s_{11} + d_2 s_{12}$. Mit Hilfe eines mit der doppelten Abtastfrequenz ($2 f_c$) getakteten Umschalters 71 werden diese neuen Abtastwerte $h_{11}$, ... und $h_{12}$, ... auf zwei Ausgänge verteilt.

Der Ausgang für $h_{11}$, ... ist direkt und der Ausgang für $h_{12}$, ... über einen Zeilenspeicher 72 (zur Verzögerung des Signals um eine Zeile) mit je einem Eingang eines zeilenfrequent betriebenen Umschalters 73 verbunden. Am Ausgang 74 des Umschalters 73 stehen somit die errechneten Zeilen $h_{11}$, ... und $h_{12}$, ... seriell als hochzeiliges Videosignal gem. Fig. 3c zur Verfügung.

Von einer mit dem ankommenden Videosignal synchronisierten Taktrückgewinnungsstufe 75 werden die für den Betrieb der Recheneinheit 64 notwendigen Taktsignale $2 f_c$ und $f_v$ für die halbbildweise Umschaltung sowie das dem Steuereingang 76 des Umschalters 73 zugeführte zeilenfrequente Taktsignal $f_H$.

Für die oben angegebene als Gleichungen allgemein dargestellte Rechenvorschrift sind nun einzelne, besonders vorteilhafte Realisierungsvarianten erkennbar:

Bei einer ersten Variante ist die Summe $s_{11} + s_{12}$ zweier Abtastwerte des Standardzeilensystems so gewählt, dass dieser Summenwert den verschobenen Mittelwert zweier untereinanderliegender Werte $h_{11}$ und $h_{12}$ des Hochzeilensystems repräsentiert:

Bedingung 1: $s_{11} + s_{12} = 0{,}75 h_{11} + 0{,}25 h_{12}$.

Somit werden die entstehenden Zeilen des einen und des anderen Halbbildes symmetrisch behandelt. Dies sichert gleiche Vertikalauflösung für beide Halbbilder auf sehr einfache Weise. Dadurch kann ein Standardempfänger durch die angegebene Tiefpassfilterung ein Standardzeilensignal mit Standardauflösung generieren, das dann in dem in Fig. 3b angedeuteten Zeilenraster wiedergegeben werden kann. Dies bedeutet eine sehr einfache Kompatibilität des Standardempfängers zum Hochqualitätsempfänger.

Als zweite Bedingung soll die Differenz $s_{11}-s_{12}$ zweier Abtastwerte im Standardzeilensystem so festgelegt sein, dass sie gleich ist der Differenz $h_{11}-h_{12}$ zweier untereinanderliegender Werte des Hochzeilensystems. Das bedeutet, dass bei Gleichheit der Abtastwerte untereinanderliegender Bildpunkte auch Gleichheit aufeinanderfolgender gesendeter Abtastwerte gegeben ist.

Zur Rückgewinnung der originalen Hochzeilen-Abtastwerte ist das Signal phasenrichtig abzutasten. Die Rückgewinnung des zugehörigen Abtasttaktes erfolgt dabei zweckmässig mit einem Burst (beispielsweise pro Zeile oder pro Halbbild) mit einer Frequenz gleich der halben Abtastfrequenz.

Ist die Differenz $s_{11}-s_{12}$ in der oben beschriebenen Weise festgelegt, dann wirken sich mögliche Phasenfehler der Abtasttaktrückgewinnung in gleichmässigen Flächen am wenigsten aus, also dort wo sie sonst am meisten wahrgenommen werden.

Aus den beiden genannten Bedingungen ergeben sich dann die Bestimmungsgleichungen der Codierung und Decodierung:

$$s_{11} = 1/2\,(1{,}75h_{11} - 0{,}75h_{12}),\ s_{12} = 1/2\,(-0{,}25h_{11} + 1{,}25h_{12});$$
$$h_{11} = 1{,}25s_{11} + 0{,}75s_{12},\ h_{12} = 0{,}25s_{11} + 1{,}75s_{12}.$$

Bei einer zweiten Varianten ist die Bedingung 1 genauso wie die der ersten Varianten gewählt, um wiederum sehr einfache Kompatibilität des Standardempfängers durch einfach zu realisierende Tiefpassfilterung zu sichern. Eine weitere Bedingung ist hier die sehr einfache Realisierbarkeit der Rechenoperation: Multiplikationen sollen durch simple Schiebeoperationen realisierbar sein, d.h. als Koeffizienten für die Codierung und Decodierung sind nur Binärzahlen zugelassen:

$$s_{11} = 0{,}5h_{11} + 0{,}5h_{12},\ s_{12} = 0{,}25h_{11} - 0{,}25h_{12};$$
$$h_{11} = s_{11} + 2s_{12},\ h_{12} = s_{11} - 2s_{12}.$$

Bei einer dritten Variante ist als Bedingung 1 der verschobene Mittelwert zweier untereinanderliegender Abtastwerte des Hochzeilensystems unmittelbar als erster Abtastwert des Standardzeilensystems codiert:

$$s_{11} = 0{,}75h_{11} + 0{,}25h_{12}.$$ Als zweite Bedingung ist wie in der ersten Variante die Gleichheit der Differenzen gefordert:

$$s_{11} - s_{12} = h_{11} - h_{12}.$$

Die Erfüllung der Bedingung 1 ist für solche Kanäle besonders vorteilhaft, bei denen – in Abweichung von dem Zeilenraster gem. Fig. 3b – die Übertragung in aufgeteilten Kanälen (z.B. Frequenzmultiplex) erfolgt. Es werden dann zweckmässig in der einen Kanalhälfte die Mittelwerte und in der anderen Kanalhälfte die Differenzen übertragen. Mit der ersten Kanalhälfte ist dann eine einfache Kompatibilität des Standardempfängers erreichbar.

**Patentansprüche**

1. System zur Übertragung eines Farbvideosignals erhöhter Auflösung in Zeitmultiplex, wobei die Luminanz- und die Chrominanzinformation innerhalb einer Zeile enthalten sind, dadurch gekennzeichnet, dass die zu übertragenden optischen Bilder (Filme, Szenen) mit einer höheren Zeilenzahl als die durch das jeweils zur Signalübertragung angewandte Übertragungssystem gegebene Zeilenzahl abgetastet werden, dass das daraus resultierende hochzeilige Videosignal für die Übertragung in ein Videosignal mit durch das Übertragungssytem vorgegebener Standardzeilenzahl umgewandelt wird, und dass eine der Verringerung der Zeilenzahl entsprechende Erhöhung der in einer Zeile angeordneten Abtastwerte vorgenommen wird.

2. System nach Anspruch 1, dadurch gekennzeichnet, dass aus je zwei, in zwei zeitlich benachbarten Zeilen direkt untereinanderliegenden Abtastwerten ($h_{11}$, $h_{12}$) des hochzeiligen Videosignals je zwei in einer Zeile nebeneinanderliegende Abtastwerte ($s_{11}$, $s_{12}$) des Videosignals mit Standardzeilenzahl abgeleitet werden.

3. System nach Anspruch 2, dadurch gekennzeichnet, dass jeweils die aus den untereinanderliegenden Abtastwerten ($h_{11}$, $h_{12}$) des hochzeiligen Videosignals abgeleiteten beiden nebeneinanderliegenden Abtastwerte ($s_{11}$, $s_{12}$) des Videosignals mit Standardzeilenzahl durch Addition der mit unterschiedlichen Faktoren ($a_1$, $a_2$; $b_1$, $b_2$) bewerteten Abtastwerte des hochzeiligen Videosignals gewonnen werden.

4. System nach Anspruch 3, dadurch gekennzeichnet, dass die Summe zweier benachbarter Abtastwerte ($s_{11}$, $s_{12}$) des Videosignals mit Standardzeilenzahl gleich ist der gewichteten Summe zweier untereinanderliegender Abtastwerte ($h_{11}$, $h_{12}$) des Hochzeilensystems, dass der eine Abtastwerte ($h_{11}$) des Hochzeilensystems das Gewicht 0,75 und der andere Abtastwert ($h_{12}$) des Hochzeilensystems das Gewicht 0,25 erhält, und dass gleichzeitig die Differenz zweier benachbarter Abtastwerte des Videosignals mit Standardzeilenzahl gleich ist der Differenz der beiden untereinanderliegenden Abtastwerte ($h_{11}$, $h_{12}$) des Hochzeilensystems.

5. System nach Anspruch 2, dadurch gekennzeichnet, dass die Zeilen des Videosignals mit Standardzeilenzahl beider Halbbilder jeweils zwischen einer Zeile des ersten und der nachfolgenden Zeile des zweiten Teilbildes des hochzeiligen Signals erzeugt werden.

6. System nach Anspruch 1, dadurch gekennzeichnet, dass die Abtastwerte des einen Halbbildes des hochzeiligen Videosignals jeweils in horizontaler Richtung um eine Bildpunktdauer gegenüber dem anderen Halbbild versetzt sind.

7. System nach Anspruch 1, dadurch gekennzeichnet, dass zur Wiedergabe des übertragenen Videosignals mit Standardzeilenzahl durch einen konventionellen Standardempfänger (7) das Videosignal tiefpassgefiltert (11) wird.

8. System nach Anspruch 1, dadurch gekennzeichnet, dass zur Wiedergabe des übertragenen Videosignals mit Standardzeilenzahl durch einen hochauflösenden und hochzeiligen Empfänger (6) die Zeilen des Videosignals bezüglich Anzahl und Dauer durch entsprechende Verknüpfung jeweils zweier, gleichzeitig vorliegender Abtastwerte und Verzögerung um eine Zeilendauer sowie Serialisierung der unverzögert und verzögert erzeugten Zeilensignale und Zeitkompression zur Verringerung der Zeilendauer rückgewandelt werden.

9. System nach Anspruch 1, dadurch gekennzeichnet, dass das Zeitmultiplex-Fabvideosignal die Luminanz-, die Chrominanz- und die Toninformation in jeweils einer Zeile enthält und zur Erzeugung dieses Signals, die jeweilige Information entsprechend zeitkomprimiert und innerhalb einer Zeilendauer addiert wird, und dass beim Vorliegen eines breitformatigen Videosignals (Seitenverhältnis z.B. 5:3) ausserdem in die Vertikal-Austastlücke eine Kennadresse eingefügt wird, mit deren Hilfe die Wiedergabe eines normalformatigen Videosignals (Seitenverhältnis 4:3) gesteuert werden kann.

10. System nach Anspruch 9, dadurch gekennzeichnet, dass zur Wiedergabe des Zeitmultiplex-Farbvideosignals durch einen hochauflösenden, hochzeiligen und breitformatigen Empfänger (6) das übertragene Signal in seine Komponenten Luminanz-, Chrominanz-, Toninformation getrennt und diese dekomprimiert werden.

11. System nach Anspruch 9, dadurch gekennzeichnet, dass zur Wiedergabe des Zeitmultiplex-Farbvideosignals durch einen Standardempfänger (7) das übertragene Signal in seine Komponenten Luminanz-, Chrominanz-, Toninformation getrennt und diese dekomprimiert werden, und dass mit Hilfe der Kennadresse der Einschreibtakt für die Dekompressionsschaltung (52, 53) so gesteuert wird, dass nur der gewünschte Formatbereich ausgewertet wird.

**Claims**

1. System for the transmission of a high-resolution colour video signal in time multiplex, the luminance and chrominance informations being contained in a line, characterized in that the optical pictures to be transmitted (films, scenes) are scanned with a higher line number than the line number given by the transmission system used in each case for signal transmission, that the resulting high-definition video signal is converted for transmission purposes into a video signal with a standard line number given by the transmission system and that there is an increase in the scan values in a line corresponding to the reduction of the line number.

2. System according to claim 1, characterized in that from in each case two scan values ($h_{11}$, $h_{12}$) of the high-definition video signal directly superimposed in two time-adjacent lines are derived in each case two scan values ($s_{11}$, $s_{12}$) of the video signal juxtaposed in a line and with the standard line number.

3. System according to claim 2, characterized in that in each case the two juxtaposed scan values ($s_{11}$, $s_{12}$) of the video signal with standard line number derived from the superimposed scan values ($h_{11}$, $h_{12}$) of the high-definition video signal are obtained by addition of the scan values of the high-definition video signal weighted with different factors ($a_1$, $a_2$; $b_1$, $b_2$).

4. System according to claim 3, characterized in that the sum of two adjacent scan values ($s_{11}$, $s_{12}$) of the video signal with standard line number is the same as the weighted sum of two superimposed scan values ($h_{11}$, $h_{12}$) of the high-definition system, that one scan value ($h_{11}$) of the high-definition system receives the weight 0.75 and the other scan value ($h_{12}$) of the high-definition system the weight 0.25 and that simultaneously the difference of two adjacent scan values of the video signal with standard line number is the same as the difference of the two superimposed scan values ($h_{11}$, $h_{12}$) of the high-definition system.

5. System according to claim 2, characterized in that the lines of the video signal with standard line number of two fields are in each case produced between a line of the first and the following line of the second field of the high-definition signal.

6. System according to claim 1, characterized in that the scan values of one field of the high-definition video signal are in each case horizontally displaced by one picture point duration compared with the other field.

7. System according to claim 1, characterized in that the video signal is low pass-filtered (11) for reproducing the transmitted video signal with a standard line number by a conventional standard receiver (7).

8. System according to claim 1, characterized in that for reproducing the transmitted video signal with standard line number by a high-resolution and high definition receiver (6), the lines of the video signal are reconverted with respect to the number and duration by corresponding combination of in each case two, sumultaneously present scan values and delay by one line duration, as well as serialization of the undelayed and delayed-produced line signals and time compression for reducing the line duration.

9. System according to claim 1, characterized in that the time multiplex colour video signal contains the luminance, chrominance and sound informations in in each case one line and for producing said signal the particular information is correspondingly time-compressed and added within a line duration and that when there is a wide-format video signal (picture ratio e.g. 5:3) an identification address is additionally introduced into the vertical blanking interval and with the aid of which it is possible to control the reproduction of a normal-format video signal (picture ratio 4:3).

10. System according to claim 9, characterized in that for reproducing the time multiplex colour video signal by a high-resolution, high-definition and wide-format receiver (6), the transmitted signal is separated into its components luminance, chrominance and sound information and these are decompressed.

11. System according to claim 9, characterized in that for reproducing the time multiplex colour video signal by a standard receiver (7), the transmitted signal is separated into its components luminance, chrominance and sound information and these are decompressed and that with the aid of the identification address the writing clock for the decompression circuit (52, 53) is so controlled that only the desired format range is evaluated.

**Revendications**

1. Système pour la transmission de signal vidéo couleur de résolution augmentée en multiplexage dans le temps, l'information de luminance et l'information de chrominance étant contenues à l'intérieur d'une ligne, système caractérisé en ce que les images optiques à transmettre (films, scènes) sont exploitées avec un nombre de lignes plus élevé que le nombre de lignes donné par le système de transmission respectivement mis en œuvre pour la transmission du signal, que le signal vidéo à nombre de lignes élevé en résultant, est transformé pour la transmission en un signal vidéo avec le nombre de lignes standard prédéfini par le système de transmission, et qu'il est prévu une augmentation des valeurs d'exploration disposées sur une ligne correspondant à cette diminution du nombre de lignes.

2. Système selon la revendication 1, caractérisé en ce que, à partir de respectivement deux valeurs d'exploration ($h_{11}$, $h_{12}$), placées directement l'une sous l'autre sur deux lignes voisines dans le temps, du signal vidéo à nombre de lignes élevé, sont dérivées respectivement deux valeurs d'exploration ($s_{11}$, $s_{12}$), juxtaposées sur une ligne, du signal vidéo avec le nombre de lignes standard.

3. Système selon la revendication 2, caractérisé en ce que, respectivement les deux valeurs de balayage juxtaposées ($s_{11}$, $s_{12}$) du signal vidéo avec un nombre de lignes standard, valeurs dérivées des valeurs d'exploration placées l'une sous l'autre ($h_{11}$, $h_{12}$) du signal de vidéo à nombre de lignes élevé, sont obtenues par addition des valeurs d'exploration du signal vidéo à nombre de lignes élevé pondérées par des facteurs différents ($a_1$, $a_2$; $b_1$, $b_2$).

4. Système selon la revendication 3, caractérisé en ce que la somme de deux valeurs d'exploration voisines ($s_{11}$, $s_{12}$) du signal vidéo avec un nombre de lignes standard, est identique à la somme pondérée de deux valeurs d'exploration placées l'une sous l'autre ($h_{11}$, $h_{12}$) du système à nombre de lignes élevé, que l'une ($h_{11}$) des valeurs d'exploration du système à nombre de lignes élevé reçoit la pondération 0,75, tandis que l'autre valeur d'exploration ($h_{12}$) du système à nombre de lignes élevé, reçoit la pondération 0,25, et que simultanément, la différence entre deux valeurs d'exploration voisines du signal vidéo avec un nombre de lignes standard, est identique à la différence entre deux valeurs d'exploration placées l'une sous l'autre ($h_{11}$, $h_{12}$) du système à nombre de lignes élevé.

5. Système selon la revendication 2, caractérisé en ce que les lignes du signal vidéo avec un nombre de lignes standard des deux moitiés d'image, sont respectivement obtenues entre une ligne de la première partie d'image et la ligne suivante de la deuxième partie d'image du signal à nombre de lignes élevé.

6. Système selon la revendication 1, caractérisé en ce que les valeurs d'exploration d'une première moitié d'image du signal vidéo à nombre de lignes élevé, sont décalées respectivement en direction horizontale d'une durée de points d'image par rapport à l'autre moitié d'image.

7. Système selon la revendication 1, caractérisé en ce que pour la reproduction par un récepteur standard (7) classique du signal vidéo transmis avec un nombre de lignes standard, le signal vidéo subit une filtration passe-bas (11).

8. Système selon la revendication 1, caractérisé en ce que pour la reproduction par un récepteur à haute résolution et à nombre de lignes élevé (6), du signal vidéo transmis avec un nombre de lignes standard, les lignes du signal vidéo sont converties en retour en ce qui concerne le nombre et la durée par une combinaison appropriée de respectivement deux valeurs d'exploration se présentant simultanément, et par temporisation d'une durée de ligne ainsi que par la mise en série des signaux de lignes non temporisés et temporisés ainsi obtenus, et par compression de temps pour réduire la durée de lignes.

9. Système selon la revendication 1, caractérisé en ce que le signal vidéo couleur multiplexé dans le temps contient sur respectivement une ligne, l'information de luminance, l'information de chrominance et l'information de son, et que pour obtenir ce signal, l'information considérée est comprimée dans le temps de façon appropriée, et totalisée à l'intérieur d'une durée de ligne, et que, en présence d'un signal vidéo de format large (rapport des côtés de par exemple 5:3), il est en outre inséré dans les intervalles de suppression verticaux, une adresse caractéristique, à l'aide de laquelle la reproduction d'un signal vidéo de format normal (rapport des côtés 1:3), peut être commandée.

10. Système selon la revendication 9, caractérisé en ce que pour reproduire le signal vidéo couleur multiplexé dans le temps par un récepteur à haute résolution à nombre de lignes élevé et à large format (6), le signal transmis est scindé en ses composantes d'informations de luminance, de chrominance et de son, et celles-ci sont décomprimées.

11. Système selon la revendication 9, caractérisé en ce que pour reproduire le signal vidéo couleur multiplexé dans le temps par un récepteur standard (7), le signal transmis est scindé en ses composantes d'informations de luminance, de chrominance et de son, et celles-ci sont décomprimées, et que, à l'aide de l'adresse caractéristique, la synchronisation de l'inscription pour le circuit de décompression (52, 53) est commandée de façon que seule la plage de format souhaitée soit exploitée.

Fig.1

Fig.2

Fig.3

Fig.4

Fig.5

11

FIG. 6

FIG. 7

a.) SEITEN-VERHÄLTNIS 5:3

b.) SEITEN-VERHÄLTNIS 4:3

FIG. 8

FIG. 9